# EUROPEAN PATENT APPLICATION

(11) **EP 0 857 903 A2**
(43) Date of publication of application: **12.08.1998**
(21) Application number: 98200259.4
(22) Date of filing: 02.02.1998
(51) Int. Cl.: F16K 25/00, F16K 1/34

(54) **Lift valve**

(30) Priority: 31.01.1997 NL 1005152
(71) Applicant: BOOTSMAN HOLDING B.V., 2130 AK Hoofddorp (NL)
(72) Inventor: Oosterwijk, Alexander, 1911 JV Uitgeest (NL)
(74) Representative: Assendelft, Jacobus H.W.

(57) **Abstract**

Fluid treatment device with a shutter for controlling the fluid flow, said shutter has a valve and a valve seat, in the closed position of the shutter the valve rests sealingly on the valve seat, and the surface pressure and/or the actuation and/or the type of material of the valve and/or the valve seat in the area where they make mutual contact is/are such that a possible deposition on the valve and/or valve seat in said contact area is made loose, preferably such that a proper functioning is ensured for a long time.

## Description

The invention is concerned with a fluid treatment device with shutter, e.g. a waste water processing device or a device for brewing hot drinks like coffee. The invention is also concerned with the shutter with which the fluid treatment device according to the invention is provided. Next, the invention is illustrated by virtue of a device for brewing hot drinks (to be called: coffeemaker), but it will be appreciated that the invention is not restricted to such a device.

Fluid treatment devices are provided with one or more shutters (valves), to control the fluid flow. The parts of said shutters are exposed to the fluid. Therefor the service life of the shutter is restricted under particular circumstances, resulting in early repair or replacement with corresponding costs. E.g. chalk, or some other substance from the liquid is deposited on the valve or valve seat, resulting in accidental leakage. The object of the invention is to increase the service life of the fluid treatment device by providing an improved shutter such that service costs and costs and inconveniences resulting from malfunctioning are decreased or eliminated.

The above object is arrived at with the invention as indicated in the enclosed claims.

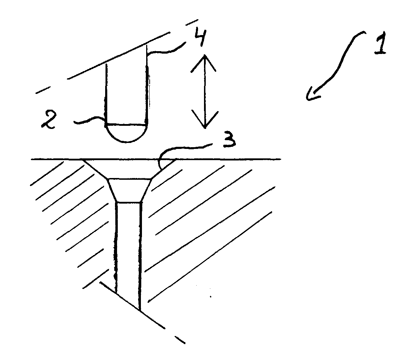

In the following the invention is further illustrated by virtue of a recently advantageous, however non-limiting example referring to the enclosed drawing showing a sectional side view of the shutter according to the invention.

The shutter 1 shown is part of a coffee brewing machine and is opened and closed by the valve rod 4 connected to a solenoid (not shown), for which purpose the valve 2 is preferably reciprocproceeatively moveable substantially perpendicular to the sealing plane. The shutter 1 controls the hot water supply to the brewing space and the valve 2 and the valve seat 3 are therefor exposed to tap water with a temperature of approximately 90 °C or higher. If the water has flown beyond the shutter 1, said water is mixed with e.g. tea leaves, coffee powder or powdery soup. The known shutter at this location in the coffee machine shows growth of chalk deposition on the valve and valve seat. This leads to loss of sealing. To avoid the loss of sealing as long as possible, the known valve is made of flexible rubber. It was learnt that rubber is prone to chalk deposition, such that choosing such material in fact increases the problems. If the known shutter is closed, the valve and the valve seat have a ring type surface contact.

The shutter 1 according to the invention has a valve 2 of a material, like ceramic material, that is less susceptive to chalk deposition compared to rubber. The valve surface preferably has a very smooth, substantially pore free structure.

Furthermore, the valve 2 and the valve seat 3 are mutually adapted such that if the shutter is closed, there is an at least substantially line contact between the valve 2 and the valve seat 3. Therefor the surface pressure at the mutually bearing surfaces of the valve 2 and valve seat 3 is high such that a possible deposition of chalk is crunched and thus automatically removed from the vlave 2 and the valve seat 3.

To bear those high surface pressures without problems, at least the mutually contacting parts of the valve and the valve seat are made of hard material, for which purpose ceramic material is a proper choice as well. The valve 2 is made spherical and the valve seat 3 is made "searching" (self aligning) for the vlave 2. Therefor a proper seat of the valve 2 on the valve seat 3 is ensured. Preferably, the valve 2 projects partly into the valve seat 3.

There are of course other embodiments of the invention possible. E.g. in which the valve 2 is conical (possibly truncated). The valve seat 3 then is not necesserily "searching". Or in which the valve 2 has a surface of e.g. stainless steel.

The valve 2 and the valve seat 3 are possibly mutually rotated around their axis if they are mutually bearing, to abrade depostion, for which reason there are rotating means.

## Claims

1. Fluid treatment device with a shutter for controlling the fluid flow, said shutter has a valve and a valve seat, in the closed position of the shutter the valve rests sealingly on the valve seat, and the surface pressure and/or the actuation and/or the type of material of the valve and/or the valve seat in the area where they make mutual contact is/are such that a possible deposition on the valve and/or valve seat in said contact area is made loose, preferably such that a proper functioning is ensured for a long time.

2. Device according to claim 1, wherein the shutter is provided in a pipe leading from a supply of hot fluid.

3. Device according to claim 1 or 2, wherein the fluid, after passing the shutter, comes into a brewing chamber, wherein said brewing chamber preferably has a supply of a brewing substance, like coffee or tea, seperate from the fluid supply.

4. Device according to claim 3, wherein the brewing chamber has a dispensing channel leading to a positioning location for a cup or can.

5. Device according to any of the preceeding claims, wherein the valve and/or valve seat at least in the mutual contact areas are of hard material like ceramic or metal material, such as steel.

6. Device according to any of the preceeding claims, wherein the valve and/or valve seat is shaped such that in their closed position they make a substantially line contact.

7. Shutter, comprising a valve and valve seat, in the closed position of the shutter the valve rests sealingly on the valve seat, and the surface pressure and/or the actuation and/or the type of material of the valve and/or the valve seat in the area where they make mutual contact is/are such that a possible deposition on the valve and/or valve seat in said contact area is made loose.
